(19) Europäisches Patentamt
European Patent Office
Office européen des brevets

(11) **EP 0 821 820 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.⁷: **G09F 13/00**

(21) Anmeldenummer: **97919249.9**

(22) Anmeldetag: **20.02.1997**

(86) Internationale Anmeldenummer:
**PCT/DE97/00310**

(87) Internationale Veröffentlichungsnummer:
**WO 97/30431 (21.08.1997 Gazette 1997/36)**

(54) **LEUCHTVORRICHTUNG ZUR ANZEIGE VON SCHRIFTZEICHEN**

LIGHTING DEVICE FOR DISPLAY OF GRAPHIC CHARACTERS

DISPOSITIF D'ECLAIRAGE POUR AFFICHAGE DE CARACTERES

(84) Benannte Vertragsstaaten:
**AT BE CH DE DK ES FI FR GB GR IE IT LI LU MC NL PT SE**

(30) Priorität: **20.02.1996 DE 19606179**
**22.02.1996 DE 29603225 U**

(43) Veröffentlichungstag der Anmeldung:
**04.02.1998 Patentblatt 1998/06**

(73) Patentinhaber: **Leibe, Thomas**
**04746 Hartha (DE)**

(72) Erfinder: **Leibe, Thomas**
**04746 Hartha (DE)**

(74) Vertreter:
**Hagemann, Heinrich, Dr.rer.nat., Dipl.-Chem. et al**
**Patentanwälte**
**Hagemann, Braun & Held,**
**Ismaninger Strasse 108**
**81675 München (DE)**

(56) Entgegenhaltungen:
**EP-A- 0 573 051   FR-A- 2 325 946**
**FR-A- 2 576 441   FR-A- 2 720 181**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Diese Erfindung betrifft eine Leuchtvorrichtung gemäß dem Oberbegriff des Anspruchs 1. Derartige Leuchtvorrichtungen finden insbesondere bei der Außenwerbung, Notbeleuchtungen, Lichtleitsystemen sowie Anzeigendisplays Verwendung. Sie bestehen in der Regel aus Neonröhren, die in der Form eines anzuzeigenden Schriftzuges gebogen sind, Gruppen oder einzelnen Leuchtmitteln bekannter Art. Derartige Leuchtanzeigen sind teuer und anfällig für Beschädigungen.

Eine beleuchtete Anzeigetafel geht aus der FR-A-2 720 181 hervor. Die bekannte Anzeigetafel besteht aus einer transparenten Platte, die von einer außerhalb des Körpers befindlichen Lichtquelle erleuchtet wird. Das in die transparente Platte eintretende Licht wird an einer reflektierenden Oberfläche der Platte reflektiert und tritt von dort über die Anzeigeoberfläche aus der transparenten Platte aus. Diese Anzeigetafel weist den Nachteil auf, daß sie die von der Lichtquelle ausgestrahlte Lichtleistung nur sehr schlecht ausnutzt und daß zudem bei größeren Flächen eine ungleichmäßige Ausleuchtung der Tafel auftreten kann.

Es ist die Aufgabe der vorliegenden Erfindung, eine Leuchtvorrichtung zu schaffen, welche sich kostengünstig, rahmenlos und formunabhängig herstellen läßt, das von der Quelle ausgesandte Licht optimal nutzt und eine gleichmäßige Ausleuchtung der anzuzeigenden Zeichen gewährleistet.

Diese Aufgabe wird erfindungsgemäß durch eine Leuchtvorrichtung mit den Merkmalen des Anspruchs 1 gelöst. Vorteilhafte Weiterbildungen sind in den Unteransprüchen angegeben. Da als Material für den Körper der Leuchtvorrichtung schlag- oder bruchfestes Kunststoffmaterial, z.B. Acrylglas verwendet werden kann und die Lichtquelle leicht ersetzt werden kann, haben erfindungsgemäße Leuchtvorrichtungen eine höhere Lebensdauer als etwa die in der Außenwerbung verwendeten Buchstaben aus Neonröhren. Weiterhin kann eine Niederspan-nungsstromquelle verwendet werden, was zu einer Energie-ersparnis gegenüber Leuchtelementen aus Neonröhren führt.

Gemäß einer ersten Ausführungsform der Erfindung ist der gesamte Körper in der Form des anzuzeigenden Schriftzeichens, Symbols, Piktogramm oder des anzuzeigenden Schriftzuges ausgebildet, wobei die bandförmige Lichtquelle vorzugsweise seitlich in dem Körper angebracht ist und der Kontur des Schriftzeichens, des Leuchtkörpers oder des Schriftzuges folgt. Dabei kan die Lichtaustrittsfläche die Form des anzuzeigenden Schriftzeichens oder Schriftzuges haben. Gemäß einer zweiten Ausführungsform ist die Lichtquelle derart in dem Körper angebracht, daß auf einem Teil der Lichtaustrittsfläche das anzuzeigende Schriftzeichen oder der anzuzeigende Schriftzug erscheint. Hierfür können die anzuzeigenden Schriftzeichen reliefartig in dem Körper ausgebildet sein, vorzugsweise auf der Lichtaustrittsfläche oder spiegelverkehrt auf der Rückseite. In einer ersten Variante dieser Ausführungsform wird dabei das Schriftzeichen vertieft ausgebildet und in der dadurch entstandenen Nut werden eine oder mehrere bandförmige Lichtquellen angebracht. In einer zweiten Variante wird der Buchstabe oder Schriftzug erhaben ausgebildet, so daß er von einer ringsum laufenden Nut umgeben ist, in der eine oder mehrere bandförmige Lichtquellen angeordnet sind. Die derart in den Körper eingebetteten Lichtquellen können von einer Seite des Körpers über die entsprechende Nut zugänglich sein oder in der Nut vergossen sein. Natürlich kann eine derartige Leuchtvorrichtung mit vergossenen Lichtquellen auch dadurch hergestellt werden, daß die Lichtquellen in einer Gußform in einer Konfiguration angebracht werden, die der vorangehend beschriebenen Anordnung in den Nuten entspricht, und dann der Körper um die Lichtquellen herum gegossen wird. Wenn der Körper selbst in der Form des anzuzeigenden Zeichens oder des anzuzeigenden Schriftzuges ausgebildet ist, wird im Regelfall die bandförmige Lichtquelle flach anliegend entweder in einer Nut an der Seite des Körpers oder an einer ebenen Seitenfläche des Körpers angbracht. Sie kann aber auch durch Vergießen in den Körper integriert werden.

Das Material des Körpers kann an der Lichtaustrittsfläche durchsichtig oder diffus streuend ("milchig") und entsprechend der Anwendung gegebenenfalls auch gefärbt sein. Die Lichtquelle kann mit einer gewissen Neigung montiert sein, um das abgestrahlte Licht mehrheitlich auf eine verspiegelte Fläche zu richten. Die Ausbildung einer Seitenfläche des Körpers als Spiegel kann durch Verspiegeln der Fläche mit bekannten Techniken, z.B. durch Bedampfen mit einem reflektierenden Material, Aufkleben einer reflektierenden Folie oder dergleichen, erreicht werden. Da beim Auftreffen von Licht auf eine Grenzfläche ein gewisser Lichtanteil reflektiert wird, kann eine Spiegelwirkung aber auch durch Hochglanzpolieren der entsprechenden Fläche erreicht werden. Zweckmäßigerweise wird man diese Fläche dabei so anordnen, daß der überwiegende Teil des Lichts, der aus einer für die Reflexion zu der Lichtaustrittsfläche geeigneten Richtung einfällt, reflektiert wird.

Erfindungsgemäß wird durch die bandförmige Lichtquelle die Lichtabgabe bezüglich der Richtung des Bandes gleichmäßiger, während die als Spiegel ausgebildete Fläche eine virtuelle Lichtquelle bildet, so daß die Lichtaustrittsfläche von einer weiteren Seite und damit gleichmäßiger beleuchtet wird. Der Körper kann mehrere als Spiegel ausgebildete Flächen aufweisen, wobei die Spiegelwirkung in dem Körper laufendes Licht betrifft, d.h. in dem Körper laufendes Licht wird an der verspiegelten Fläche in den Körper zurückreflektiert.

Die bandförmige Lichtquelle strahlt an den Schmalseiten nur einen geringen Lichtanteil ab, während die Spiegelfläche durch die gerichtete Reflexion zu der Lichtaustrittsfläche die Absorbtion an Licht absorbierenden Flächen des Körpers verringert, so daß insgesamt die Lichtausbeute verbessert wird. Vorteilhafterweise lenkt dabei die Spiegelfläche ein Lichtbündel, das direkt von der Lichtquelle oder von einer nicht diffus reflektierenden Fläche kommt, zu der Lichtaustrittsfläche.

Vorteilhafterweise ist eine Wand des Körpers z.B. durch Verspiegeln als Konkav- oder Konvexspiegel ausgestaltet und reflektiert Licht, das von der Lichtquelle oder einer anderen Spiegelfläche kommt, derart zu der Lichtaustrittsfläche, daß die so reflektierte Strahlung einen bestimmten, durch die Krümmung und die Orientierung dieses Wandabschnittes festgelegten Abschnitt der Lichtaustrittsfläche abdeckt, der natürlich auch die gesamte Lichtaustrittsfläche sein kann. Dabei kann der Strahlkegel durch die Reflexion sowohl aufgeweitet als auch verengt werden.

Ergänzend oder alternativ kann die vorangehend skizzierte Anordnung so modifiziert werden, daß zumindest ein Teil des auf das gekrümmte Wandelement einfallende Licht über einen zweiten, vorzugsweise ebenen Spiegel zu der Lichtaustrittsfläche reflektiert wird.

Die Lichtauskopplung an der Lichtaustrittsfläche kann auf zweierlei Weise bewirkt werden.

Die bandförmigen Lichtquellen und die nach innen verspiegelten Grenzflächen des Körpers können so eingerichtet sein, daß das in dem Körper laufende Licht auf die Lichtaustrittsfläche in einem Winkel einfällt, welcher größer ist als der Winkel der Totalreflexion $\alpha_T$. Das Licht tritt dann.nur an den Stellen der Lichtaustrittsfläche mit einer unregelmäßigen Oberfläche aus, da dort, obwohl der Einfallswinkel im Mittel größer als der Winkel der Totalreflexion ist, der Einfallswinkel lokal kleiner als der Winkel der Totalreflexion sein kann. Eine derartige unregelmäßige Oberfläche läßt sich in bekannter Weise durch Anätzen, Anschleifen oder durch das Aufbringen einer Lichtstreuenden Substanz oder Folie erreichen.

Alternativ können die Lichtquelle und die reflektierenden Flächen so eingerichtet sein, daß das von ihnen ausgestrahlte bzw. reflektierte Licht zumindest teilweise in einem Winkel auf die Lichtaustrittsfläche einfällt, der kleiner ist als der Winkel der Totalreflexion, so daß es aus dem Körper teilweise austritt. Da dabei jedoch ein bestimmter Anteil des Lichtes in den Körper zurückreflektiert wird, ist es vorteilhaft, gegenüber der Lichtaustrittsfläche eine parallele verspiegelte Fläche vorzusehen, welche gegebenenfalls zusammen mit weiteren verspiegelten Flächen des Körpers, das Licht wieder zu der Lichtaustrittsfläche zurückleitet.

Für bestimmte Anwendungen kann es nachteilig sein, daß das unmittelbar von der Lichtquelle kommende Licht aus der Lichtaustrittsfläche austritt. Dies gilt insbesondere dann, wenn die bandförmige Lichtquelle aus mehreren Einzellichtquellen besteht und die Distanz von der Lichtquelle zu der Lichtaustrittsfläche zu klein ist, damit sich die Lichtkegel der Einzellichtquellen an der Lichtaustrittsfläche überlappen können. Für derartige Fälle kann die Lichtquelle durch eine geeignete Orientierung oder übliche strahlbegrenzende Anordnungen so eingerichtet sein, daß das von ihr ausgestrahlte Licht, das ohne vorherige Reflexion zu der Lichtaustrittsfläche gelangt, dort in einem Einfallswinkel größer als dem Winkel der Totalreflexion einfällt.

Die erfindungsgemäße Leuchtvorrichtung weist einen massiven Körper auf, der insbesondere auch aus Kunststoff bestehen kann, der sich leicht formen und bearbeiten läßt. Sie ist daher auch in komplizierten Formen leicht herstellbar.

Als bandförmige Lichtquellen stehen zum einen bandförmige Leiterplatten zur Verfügung, auf denen in SMD-Technik in dichter, kompakter Folge Leuchtdioden aufgebracht sind. Zum anderen gibt es aber auch bandförmige Lichtquellen aus elektrolumineszenter Folie, welche über ihrer Länge kontinuierlich Licht erzeugen, z.B. das unter dem Handelsnamen Super Neo- Neon (SNN) bekannte Material das in dem US-Patent 5,845,752 beschrieben ist.

Weitere Merkmale und Vorteile der Erfindung ergeben sich aus der nachfolgenden detaillierten Beschreibung, in der auf die beigefügten Zeichnungen Bezug genommen wird.

Fig. 1     zeigt eine erste Ausführungsform der Erfindung,

Fig. 2     zeigt eine Querschnittsansicht einer ersten Variante der ersten Ausführungsform der Erfindung,

Fig. 3     zeigt eine Querschnittsansicht einer zweiten Variante der ersten Ausführungsform der Erfindung,

Fig, 4     zeigt eine Querschnittsansicht einer dritten Variante der ersten Ausführungsform der Erfindung,

Fig. 5a und 5b     zeigen in einer Schnittansicht einen Teil des Strahlengangs bei der dritten Variante der ersten Ausführungsform der Erfindung,

Fig. 6a - 6j     zeigen verschiedene Gestaltungen einer Nut zur Aufnahme der bandförmigen Lichtquelle,

Fig. 7a - 7d     zeigen verschiedene Anordnungen einer bandförmigen Lichtquelle in einer Nut des Körpers

Fig. 8     ist eine Vorderansicht eines Beispiels einer zweiten Ausführungsform der Erfindung.

Fig. 9a -9b     zeigen eine Rückansicht bzw. eine teilweise Schnittansicht einer ersten Variante der zweiten Ausführungsform der Erfindung

Fig. 10a - 10b  zeigen eine Rückansicht bzw. eine teilweise Schnittansicht einer zweiten Variante der zweiten Ausführungsform der Erfindung.

In der nachfolgenden Beschreibung werden gleiche oder gleichwirkende Elemente der erfindungsgemäßen Leuchtvorrichtung mit gleichen Bezugsziffern bezeichnet. Verspiegelte Flächen sind durch eine gestrichelte Linie parallel zu einer durchgezogenen Linie angedeutet.

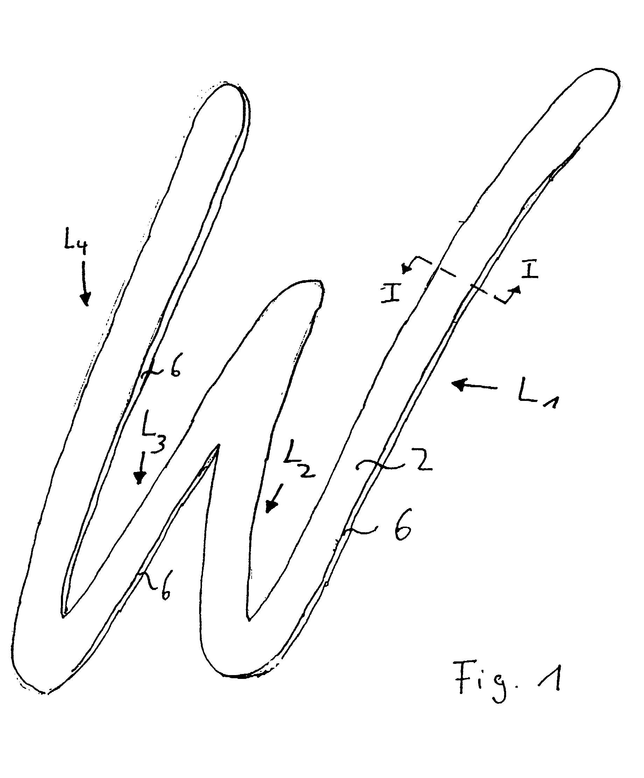

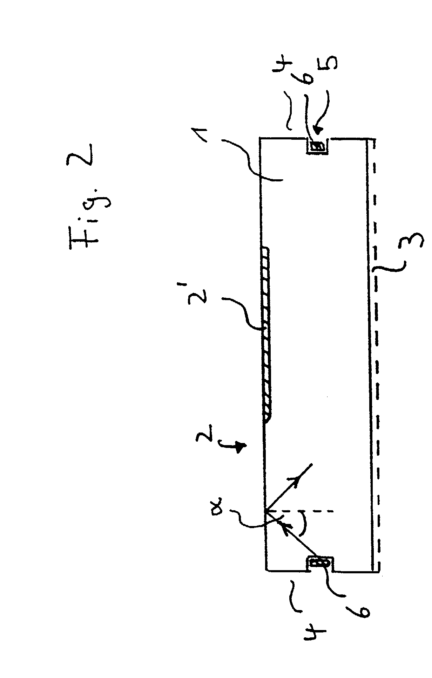

In Fig. 1 ist ein Beispiel einer ersten Ausführungsform der erfindungsgemäßen Leuchtvorrichtung in Form eines Leuchtbuchstabens (W) dargestellt. Dabei entspricht die Ansicht der Fig. 2 einem Schnitt senkrecht zur Strichlinie des Buchstabens, z.B. entlang der in Fig. 1 angedeuteten Linie I - I.
Die Leuchtvorrichtung besteht im wesentlichen aus einem Körper 1 aus einem transparenten, schlag- und bruchfesten Material, z.B. Acrylglas, das durchsichtig oder trüb sein kann. Der Körper weist zwei ebene parallele Begrenzungsflächen 2 und 3 auf, welche durch Seitenwände 4 verbunden sind. In den Seitenwänden ist jeweils eine transparente Nut 5, z.B. durch Laserschneiden oder Fräsen mit nachfolgender Politur, ausgebildet, in der sich eine bandförmige Niederspannungslichtquelle 6 erstreckt. Diese Lichtquelle kann z. B. ein Band aus elektrolumineszenter Folie ( z.B.SNN) sein und weist vorzugsweise an der Seite des Körpers oder an seiner Rückseite Anschlüsse für eine Stromversorgung (nicht gezeigt) auf. Die Nut 5 und die bandförmige Lichtquelle 6 erstrecken sich in der Richtung senkrecht zur Schnittebene entlang der Seite des Körpers und umlaufen vorzugsweise den ganzen Buchstaben. Durch das Einfügen der Lichtquelle 6 in die transparente Nut wird erreicht, daß im wesentlichen die gesamte nutzbare Lichtleistung der bandförmigen Lichtquelle 6 in den Körper 1 eintritt.

Die Fläche 2 bildet die Lichtaustrittsfläche des Körpers und kann einen aufgerauhten Abschnitt 2 aufweisen. Die der Lichtaustrittsfläche 2 gegenüberliegende Fläche 3 ist nach innen verspiegelt, so daß sie Licht, das in dem Körper 1 propagiert, zu der Lichtaustrittsfläche 2 reflektiert.

Das von der Lichtquelle 6 ausgesandte Licht fällt teilweise auf die verspiegelte Fläche 3 und teilweise auf die Lichtaustrittsfläche 2 ein. Das auf die Lichtaustrittsfläche 2 einfallende Licht tritt, soweit der Einfallswinkel $\alpha$ größer als der Winkel der Totalreflexion $\alpha_T$ ist, mit der Intensität

$$I_T = I_o \cdot \sin^2 (\alpha - \alpha_T)$$

aus und wird mit einer Intensität

$$I_R = I_o \cdot \cos^2 (\alpha - \alpha_T)$$

reflektierte, wobei $I_o$ die Intensität des einfallenden Lichtes ist. Licht, das mit einem Einfallswinkel $\alpha$ größer als dem Winkel der Totalreflexion $\alpha_T$ auf die Lichtaustrittsfläche einfällt, wird vollständig reflektiert.

Das an der Lichtaustrittsfläche 2 reflektierte Licht läuft zu der verspiegelten Fläche 3, die es, ebenso wie das direkt von der Lichtquelle 6 auf sie einfallende Licht, zu der Lichtaustrittsfläche 2 zurückreflektiert.

Bei der Reflexion zwischen parallelen Flächen bleibt der Einfallswinkel an einer Fläche bei aufeinanderfolgenden Reflexionen gleich. Um einen Lichtaustritt desjenigen Lichtanteils, der anfänglich mit einem Winkel größer als dem Winkel der Totalreflexion auf die Lichtaustrittsfläche 2 einfällt zu erreichen, kann in einer Abwandlung der in Fig. 1 dargestellten Ausführungsform die verspiegelte Fläche 3 gegen die Lichtaustrittsfläche geneigt sein, so daß sich der Einfallswinkel an der Lichtaustrittsfläche 2 bei wiederholten Reflexionen ändert. Ein Lichtaustritt läßt sich aber auch durch einen aufgerauhten Abschnitt wie in Fig. 1 unter 2' dargestellt erreichen, in dem die Orientierung der Oberfläche statistisch variiert, so daß Licht, das bezüglich der mittleren Orientierung der Lichtaustrittsfläche 2 einen Einfallswinkel größer als dem Winkel der Totalreflexion vorfindet, lokal einen Einfallswinkel kleiner als dem Winkel der Totalreflexion vorfindet. Den gleichen Effekt kann man durch eine diffus streuende Beschichtung der Lichtaustrittsfläche 2 oder durch die Verwendung eines diffus streuenden Materials für den Körper 1 erreichen. In einer bevorzugten Ausführungsform der Erfindung ist die Lichtaustrittsfläche 2 vollständig mit einer diffus streuenden, ggf. farbigen Folie bedeckt.

Bei der Ausführungsform der Fig. 2 mit parallelen Flächen 2 und 3 kann eine strahlbegrenzende Einrichtung, z.B. eine Blende, vorgesehen sein, die bewirkt, daß der Einfallswinkel des von der Lichtquelle 6 ausgehenden Lichts an der Lichtaustrittsfläche 2 und an der reflektierenden Fläche 3 größer als der Winkel der Totalreflexion ist. In diesem Fall kann Licht nur in dem diffus streuenden Abschnitt 2' austreten, während in dem restlichen Bereich der Lichtaustrittsfläche 2 das Licht totalreflektiert wird.

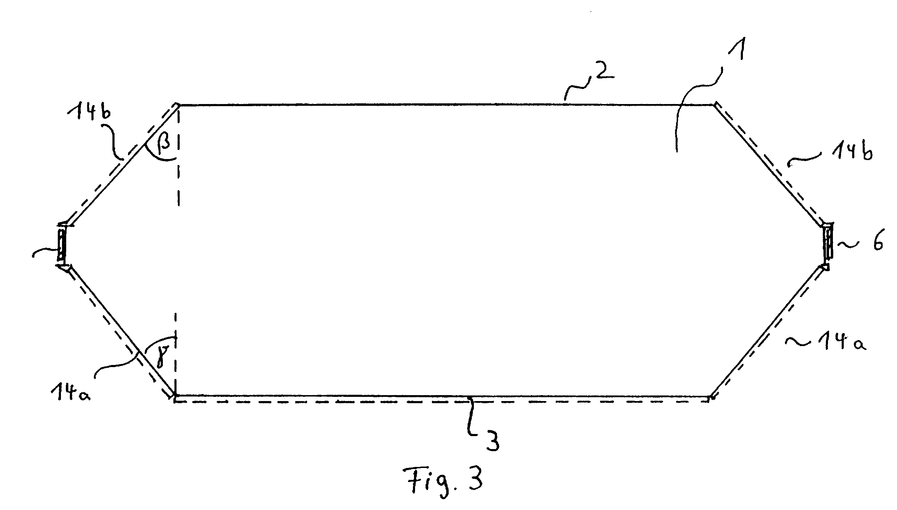

In Fig. 3 bis 5 sind verschiedene Varianten des in Fig. 1 gezeigten Leuchtbuchstabes im Querschnitt gezeigt.

Bei der in Fig. 3 dargestellten Abwandlung der Ausführungsform der Fig. 1 sind neben der Fläche 3 die Seitenwände 14a und 14b ebenfalls verspiegelt und bezüglich der Lichtaustrittsfläche 2 bzw. der reflektierenden Fläche 3 schräggestellt. Bei einer geeigneten Wahl der Winkel der Seitenflächen 14a, 14b zu den normalen der Lichtaustrittsfläche 2 bzw. der reflektierenden Fläche 3, $\beta$ bzw $\gamma$ , fällt Licht, welches anfänglich mit einem Winkel größer als dem Winkel der Totalreflexion auf die Lichtaustrittsfläche 2 einfällt, nach einer oder mehreren Reflexionen an einer der Seiten 14a, 14b mit einem Winkel auf die Lichtaustrittsfläche 2 ein, der kleiner ist als der Winkel der Totalreflexion. Da auf beiden Seiten des Körpers verspiegelte Wände 14a, 14b vorgesehen sind, kann das Licht mehrfach in dem Körper umlaufen, wobei der Einfallswinkel an der Lichtaustrittsfläche bei entsprechender Wahl der Winkel $\beta$, $\gamma$ bei jedem Umlauf verschieden ist.

Für eine ausschließliche Lichtauskopplung an unebenen Abschnitten der Lichtaustrittsfläche 2, wie vorangehend mit Bezug auf Fig. 2 beschrieben, wird der Winkel zwischen den Seitenwänden 14a und 14b zu 90° gewählt, so daß ein Lichtstrahl nach einer Reflexion an beiden Spiegeln parallel zu seiner ursprünglichen Richtung zurückläuft. Weiterhin wird der Winkel $\beta$ größer als der Winkel der Totalreflexion gewählt, so das an der Fläche 14a reflektiertes Licht immer mit einem Winkel größer als dem Winkel der Totalreflexion auf die Lichtaustrittsfläche 2 einfällt. Schließlich wird die Lichtquelle 6 so angeordnet, daß die verspiegelten Wände 14a und 14b als Blende wirken, die den direkten Lichteinfall auf die Lichtaustrittsfläche mit einem Winkel kleiner als dem Winkel der Totalreflexion verhindert. Bei dieser Ausführungsform braucht die Fläche 3 nicht verspiegelt zu sein, sofern sie zu der Lichtaustrittsfläche 2 parallel ist, da auch an dieser Fläche das Licht mit einem Einfallswinkel größer als dem Winkel der Totalreflexion einfällt.

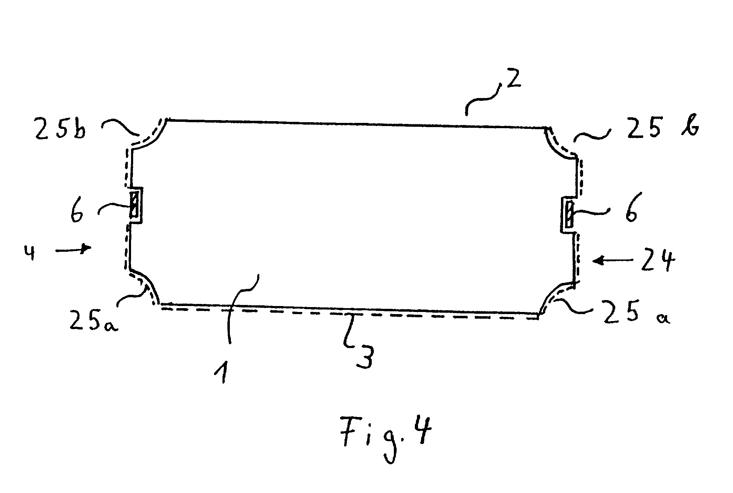

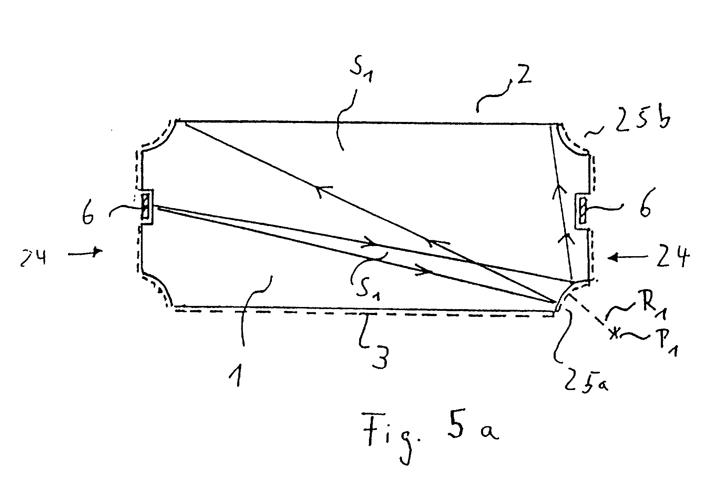

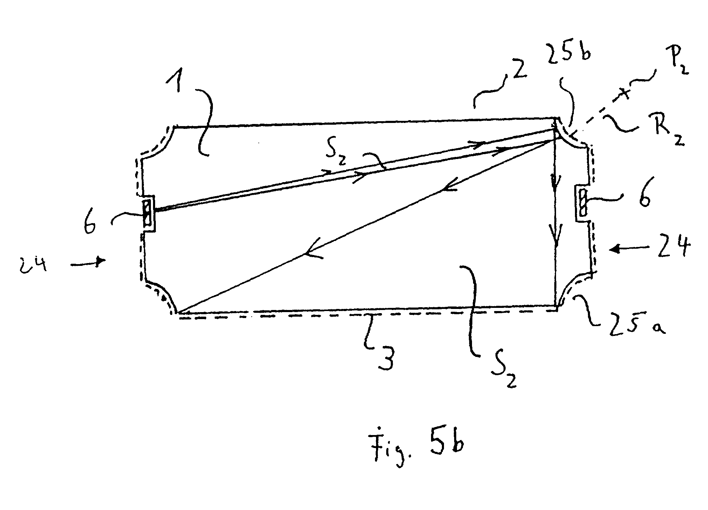

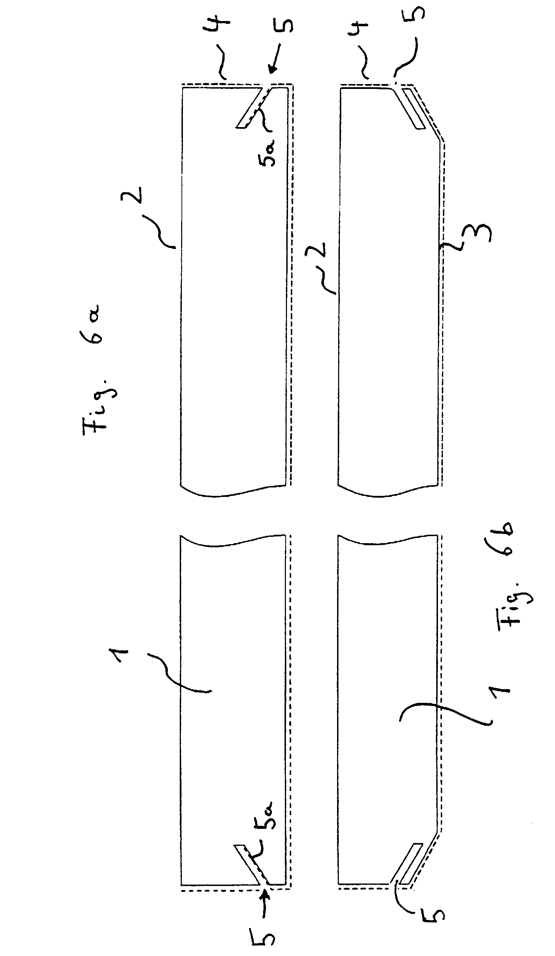

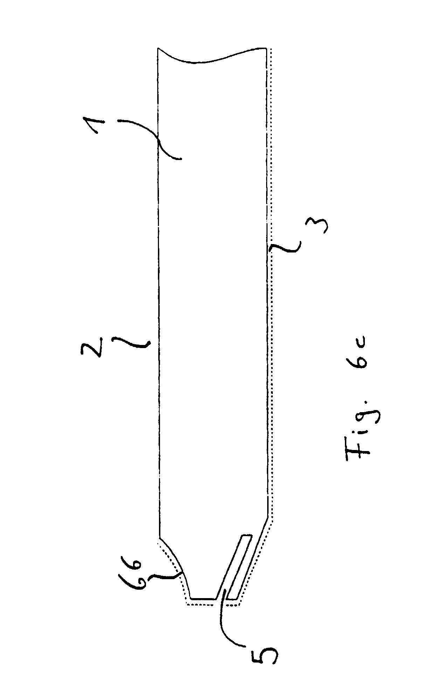

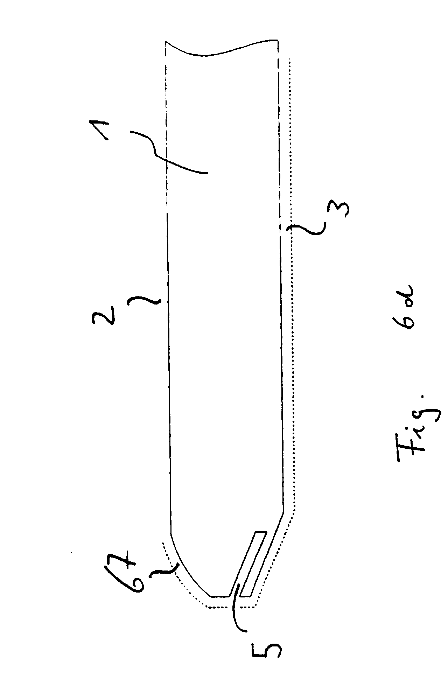

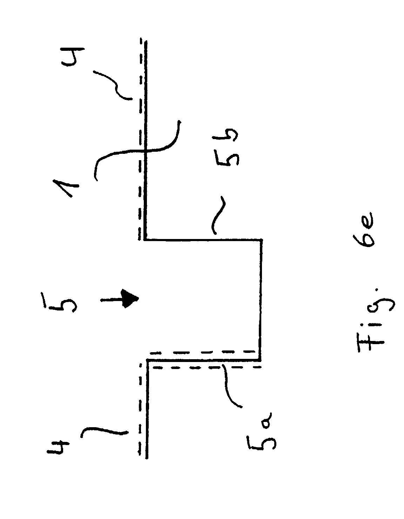

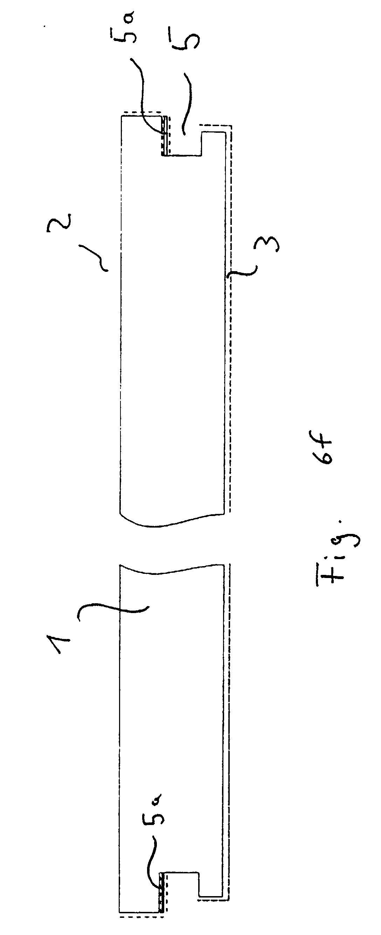

Bei der in Fig. 4 dargestellten Abwandlung der ersten Ausführungsform sind wieder die der Lichtaustrittsfläche 2 gegenüberliegende Fläche 3 sowie die Seitenwände 24a, 24b verspiegelt. Die Seitenwände weisen jedoch in den Kantenbereichen angeordnete, als Zerstreuungsspiegel ausgebildete Wandabschnitte 25a bzw. 25b auf, welche die Aufgabe haben, auf die Kantenbereiche einfallendes Licht direkt zu der Lichtaustrittsfläche 2 bzw. der reflektierenden Fläche 3 zu reflektieren und über einen bestimmten Flächenbereich zu verteilen. Ein entsprechender Strahlengang ist in den Fig. 5a und 5b beispielhaft dargestellt.

Fig. 5a illustriert die Wirkungsweise des verspiegelten Wandabschnitts 25a. Das von der Lichtquelle 6 auf den Wandabschnitt 25a einfallende Lichtbündel S1 wird durch den Wandabschnitt 25a reflektiert und dabei aufgeweitet, so daß es praktisch die gesamte Lichtaustrittsfläche 2 abdeckt. In ähnlicher Weise wird unter einem großen Ausfallswinkel an der Fläche 3 reflektiertes Licht über das Wandelement 25a zu der Lichtaustrittsfläche 2 reflektiert. Der Grad der Aufweitung des Strahlbündels $S_1$ hängt von dem Grad der Krümmung des Wandelements 25a ab. Bei entsprechend großem Krümmungsradius $R_1$ und entsprechender Lage des Mittelpunkts des Krümmungskreises $P_1$ für den Einfallsbereich erfaßt das Strahlbündel $S_1$ nur einen Teil der Lichtaustrittsfläche, was vorteilhaft sein kann, wenn bestimmte Bereiche der Lichtaustrittsfläche stärker beleuchtet werden sollen.

Die Wirkungsweise des verspiegelten Wandabschnitts 25b ist schematisch in Fig. 5b dargestellt.

Das von der Lichtquelle kommende Lichtbündel S2 wird durch das Wandelement 25b reflektiert, so daß es aufgeweitet wird und im wesentlichen die gesamte reflektierende Fläche 3 abdeckt. Die Fläche 3 reflektiert dann einen Teil dieses Lichts zu der Lichtaustrittsfläche. Der Krümmungsradius R2 und der Mittelpunkt des entsprechenden Krümmungskreises P2 können auch so gewählt sein, daß das Bündel S2 in einen Abschnitt der Fläche 3 fällt, in dem es vollständig zu der Lichtaustrittsfläche 2 reflektiert wird. Das Wandelement 25b reflektiert außerdem unter einem großen Winkel an der Lichtaustrittsfläche 2 reflektiertes Licht zu der Fläche 3.

Bei einem symmetrischen Aufbau wie in Fig. 4 gezeigt sind die vier verspiegelten Abschnitte 25a, 25b vorzugsweise kreisförmig gekrümmt und haben gleiche Krümmungsradien.

Bei den in den Fig. 2 bis 5 dargestellten Ausführungsformen der erfindungsgemäßen Leuchtvorrichtung sind jeweils zwei bandförmige Lichtquellen einander gegenüberstehend angeordnet. Alternativ kann man jedoch auch nur eine Lichtquelle an einer der beiden Seiten verwenden und die gegenüberliegende Seitenwand verspiegeln, so daß eine virtuelle Lichtquelle auf dieser Seite erzeugt wird. Ebenso kann man in den Winkelbereichen eines Buchstabens anstelle der Lichtquelle 6 eine Verspiegelung vorsehen und die bandförmige Lichtquelle nur an den geraden oder schwach gekrümmten Abschnitten des Körpers 1, z.B. entlang der Abschnitte $L_1$ - $L_4$ in Fig. 1, vorsehen.

Wie vorangehend anhand der verschiedenen Ausführungsformen erläutert wurde, können die an dem Körper vorgesehenen verspiegelten Flächenelemente auf mannigfaltige Weise variiert und kombiniert werden. Die erfindungsgemäße Leuchtvorrichtung kann jedoch auch in anderer Hinsicht abgewandelt werden.

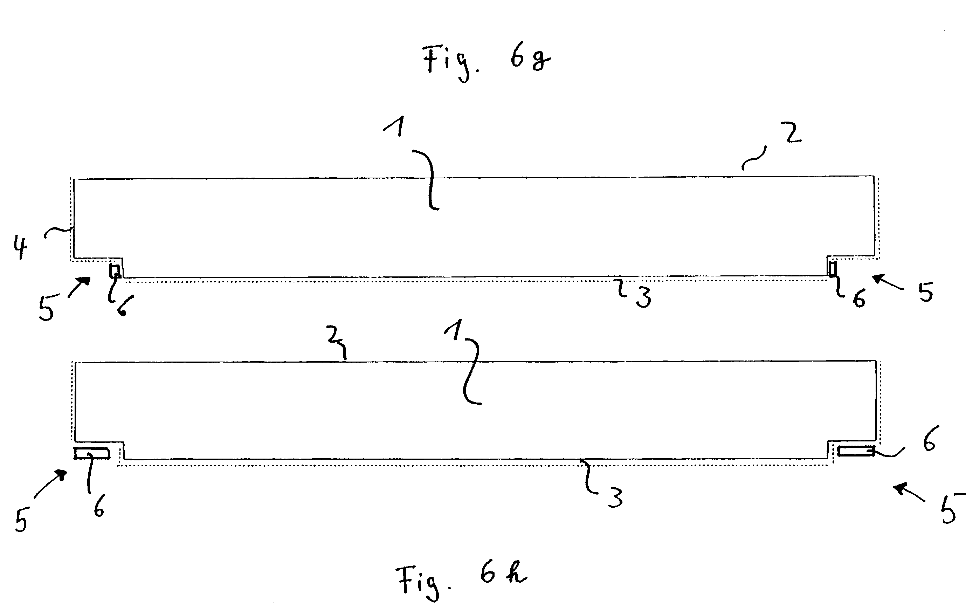

Die Figuren 6a bis 6j zeigen schematisch eine Reihe von Möglichkeiten, wie die zur Aufnahme der bandförmigen Lichtquelle vorgesehene Nut 5 gestaltet werden kann. So kann z.B., wie dies in den Fig. 6a und 6b, in denen die Lichtquelle der Einfachheit halber nicht dargestellt ist, gezeigt ist, die Nut schräggestellt sein, um das von der Lichtquelle abgestrahlte Licht stärker zu der Lichtaustrittsfläche 2 (Fig. 6b) oder zu einer verspiegelten Fläche, etwa der Seitenfläche 4 in Fig. 6a, zu richten. Insbesondere kann auf diese Weise das von der Lichtquelle abgestrahlte Licht gezielt auf einen als Sammel- oder Zerstreuungsspiegel ausgebildeten Wandabschnitt des Körpers aufgegeben werden. Fig. 6c zeigt eine Teilansicht eines entsprechenden Körpers 1 (ohne Lichtquelle) mit einem als Zerstreuungsspiegel ausgebildeten Wandabschnitt 6c und Fig. 6d zeigt eine entsprechende Ansicht eines Körpers 1 mit einem als Sammelspiegel ausgebildeten Abschnitt 67. Bei der Nut 5 kann, wenn Licht von der bandförmigen Lichtquelle im wesentlichen nur in eine Richtung abgestrahlt wird, eine Seitenfläche 5a verspiegelt sein, um einen Lichtaustritt aus dem Körper in die Nut zu verhindern, wie dies in Fig. 6a dargestellt ist.

Fig. 6e zeigt in einer Teilansicht eine Nut 5, bei der eine Seitenwand 5a nach außen und innen verspiegelt ist, so daß von der Lichtquelle abgestrahltes Licht, das auf die Fläche 5a einfällt, zu der gegenüberliegenden Fläche 5b reflektiert wird. In Fig. 6f ist eine derartige doppelt verspiegelte Fläche 5a in Verbindung mit einer asymmetrischen Nut 5 gezeigt.

Die Nut kann auch treppenförmig ausgebildet sein (vgl. Fig. 6g und Fig. 6h). Bei einer derartigen treppenförmigen Ausgestaltung kann die bandförmige Lichtquelle 6 parallel zu der Lichtaustrittsfläche 2 (Fig. 6h) oder parallel zu einer Seitenfläche 4 (Fig. 6g) angeordnet sein. Die Nut 5 kann auch in der reflektierenden Fläche 3 ausgebildet sein (Fig. 6i bzw. Fig. 6j). Um in den Raumbereich zwischen der Nut und der Seitenwand 4 eingestrahltes Licht nutzbar zu machen, kann die Seitenwand 4 wie in Fig. 6j dargestellt abgeschrägt sein.

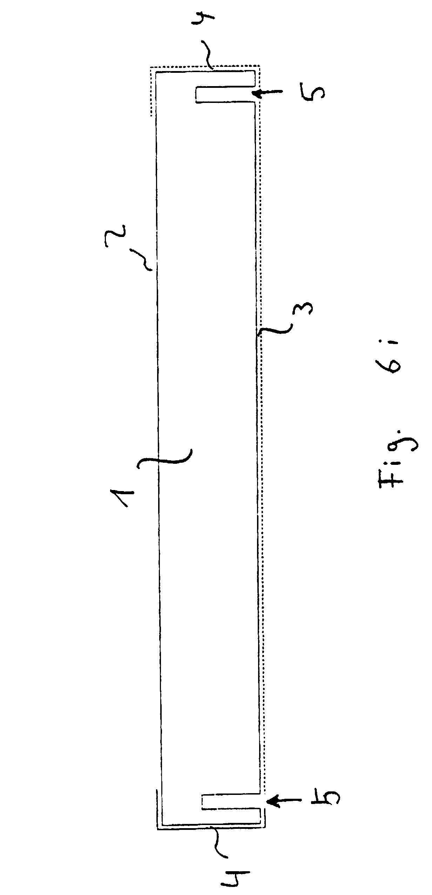

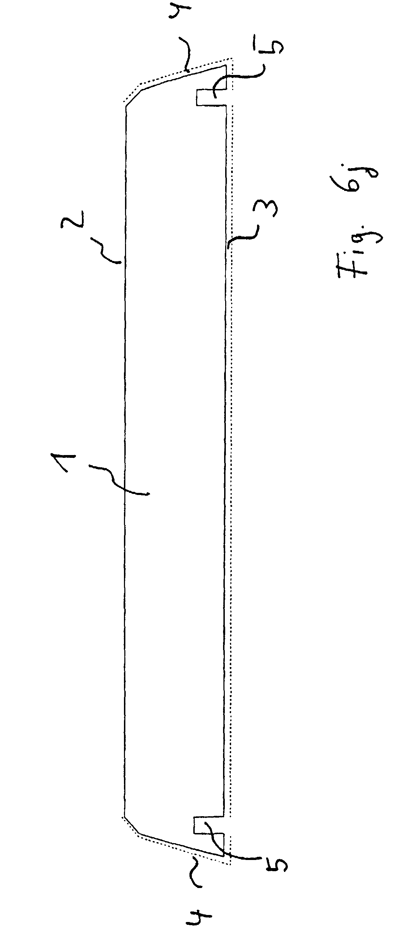

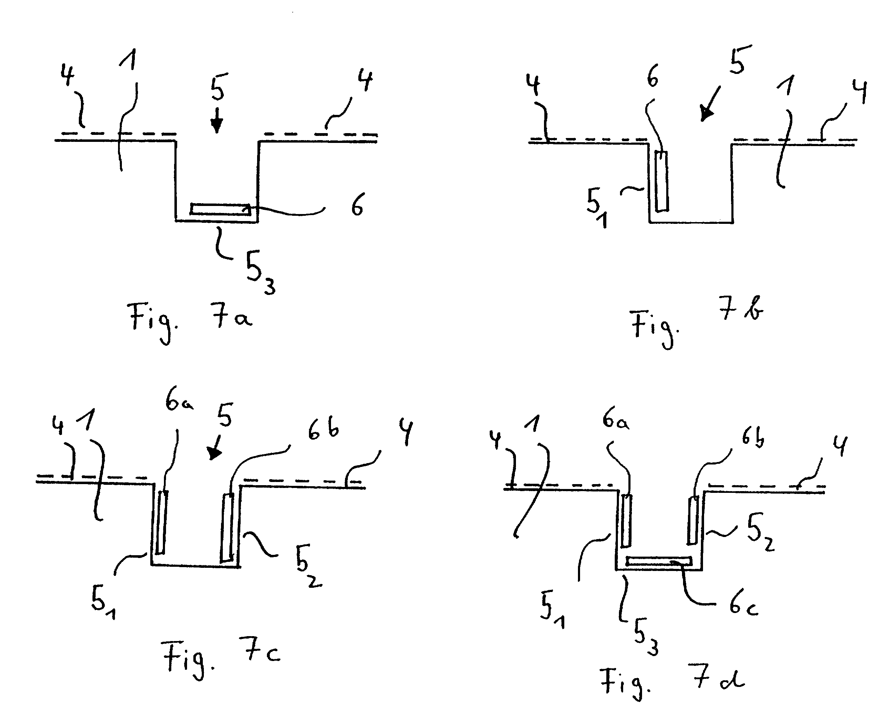

Die Fig. 7a bis 7d zeigen verschiedene Arten der Anordnung der bandförmigen Lichtquelle 6 in der Nut 5 in einer Teilansicht. Die Lichtquelle 6 kann parallel zum Boden $5_3$ der Nut (Fig. 7a) oder parallel zu einer Seitenfläche $5_1$ der Nut (Fig. 7b) angeordnet sein. Weiterhin können zwei parallele bandförmige Lichtquellen 6a und 6b jeweils parallel zu den Seitenwänden $5_1$ und $5_2$ der Nut 5 angeordnet sein (Fig. 7c). schließlich können auch parallel zu allen drei Seiten der Nut, $5_1$ - $5_3$ bandförmige Lichtquellen 6a - 6c angeordnet sein (Fig. 7d)

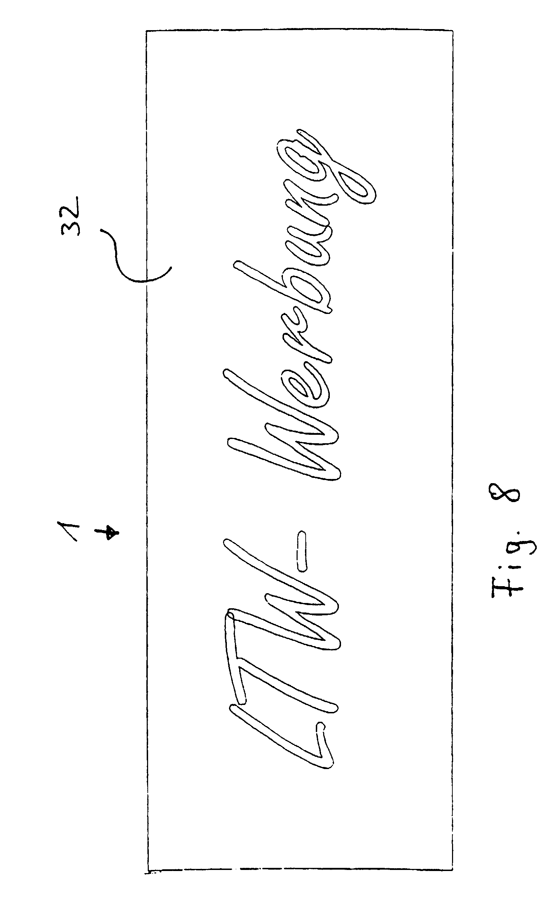

Bei einer zweiten Ausführungsform der Erfindung hat die Lichtaustrittsfläche nicht die Form des anzuzeigenden Schriftzugs. Sie bildet vielmehr eine einfache, z.B. rechteckige Fläche 32 wie in Fig. 8 gezeigt, auf der sich der anzuzeigende Schriftzug beim Betrieb der Vorrichtung hell oder dunkel abhebt. Dieser optische Kontrast wird dadurch erzeugt, daß die bandförmige Lichtquelle in der Form des anzuzeigenden Schriftzugs in dem Körper 1 eingebettet ist. Bei einer ersten Variante der zweiten Ausführungsform füllt die bandförmige Lichtquelle im wesentlichen den Schriftzug aus, d.h. der Betrachter sieht im wesentlichen das leuchtende Band der Lichtquelle als Schriftzug. Bei einer zweiten Variante der zweiten Ausführungsform verläuft die bandförmige Lichtquelle entlang dem Umriß des Buchstabens, d.h. der Betrachter sieht den Bereich der Lichtaustrittsfläche, der dem von der bandförmigen Lichtquelle umschlossen Raumbereich des Körpers entspricht, heller erleuchtet als den Rest der Lichtaustrittsfläche. Mit dem gleichen Prinzip läßt sich auch eine Negativdarstellung des Schriftzuges erzielen, in diesem Fall erfolgt die Lichtabstrahlung der bandförmigen Lichtquelle im wesentlichen in der Richtung von dem Schriftzug weg.

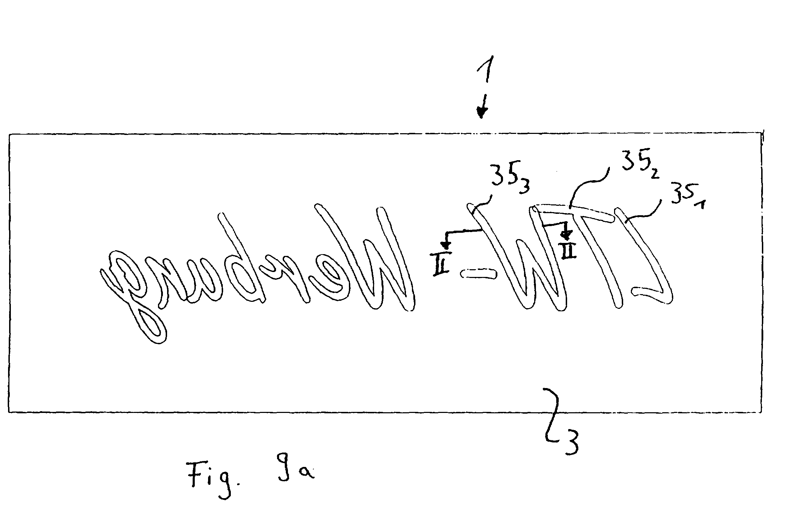

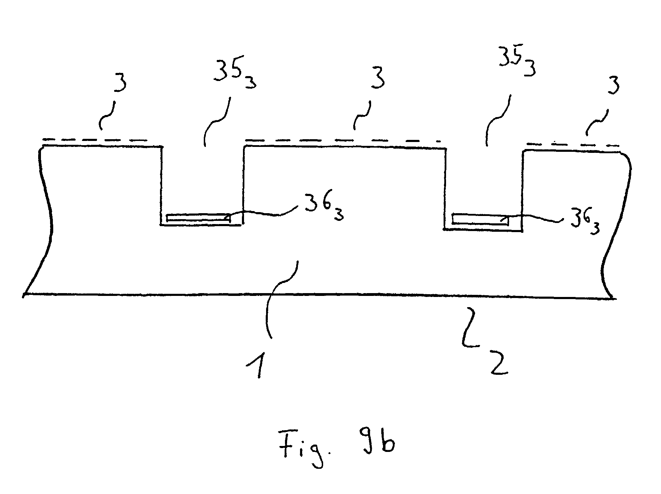

Fig. 9a zeigt eine Rückansicht eines Beispiels der ersten Variante, bei der Nuten $35_1$, $35_2$, $35_3$ in der Form von spiegelverkehrten Buchstaben in die verspiegelte Rückwand 3 des Körpers 3 eingelassen sind. Entlang dieser Nuten sind jeweils bandförmige Lichtquellen $36_1$, $36_2$, $36_3$ angeordnet, wie man am besten anhand von Fig. 9b erkennt, welche eine teilweise Schnittdarstellung entlang der Linie II - II in Fig, 9a ist. Um einen dreidimensionalen Effekt zu erreichen, können auch mehrere Lichtquellen entlang der drei Seiten der Nut 35i 1,2, ....) entsprechend der in Fig. 7d gezeigten Konfiguration angeordnet sein. Sofern die bandförmigen Lichtquellen an ihren Schmalseiten ausreichend abstrahlen, kann auch eine Konfiguration wie in Fig, 7c gezeigt verwendet werden, bei der zwei bandförmige Lichtquellen, Rücken an Rücken, in der Nut 35i angeordnet sind. Eine Konfiguration wie in Fig. 7c gezeigt kann aber auch verwendet werden, um das angezeigte Schriftzeichen dunkel erscheinen zu lassen. In diesem Fall sind die Lichtquellen so eingerichtet, daß sie nur auf der dem Körper 1 zugewandten Breitseite Licht abstrahlen.

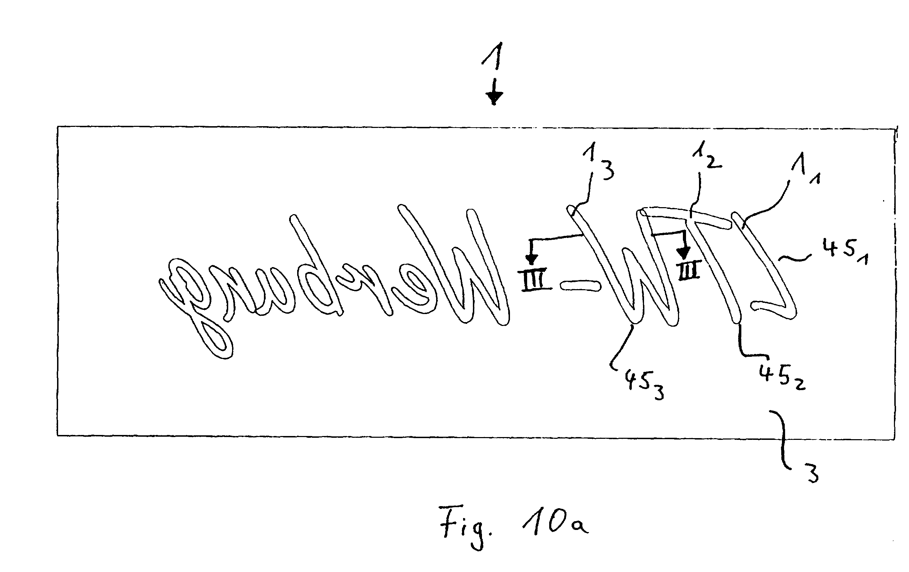

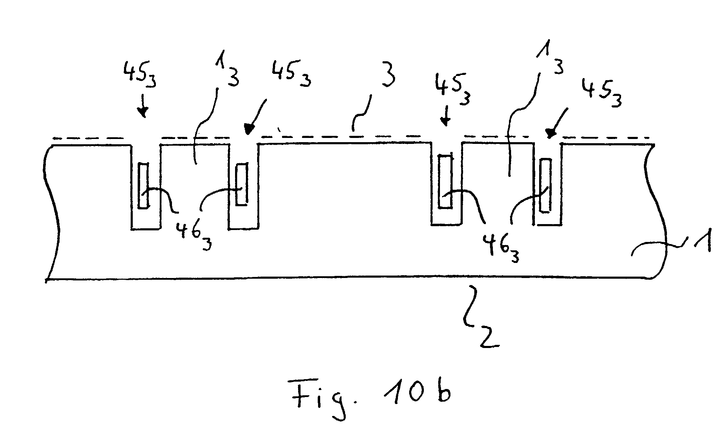

Fig. 10a zeigt eine Rückansicht der zweiten Variante der zweiten Ausführungsform, Fig. 10b ist eine teilweise Schnittansicht entlang der Linie III - III in Fig. 10a. Bei dieser Ausführungsform verlaufen Nuten $45_i$ entlang dem Umriß von spiegelverkehrten Schriftzeichen und umschließen jeweils erhabene Abschnitte $1_i$ des Körpers 1, die jeweils den anzuzeigenden Schriftzeichen entsprechen. In den Nuten $45_i$ sind bandförmige Lichtquellen $46_i$ angeordnet, welche Licht in die Abschnitte $1_i$ des Körpers 1, ähnlich wie bei der ersten Ausführungsform einstrahlen. Alternativ können die Lichtquellen $46_i$ so eingerichtet sein, daß sie Licht ausschließlich auf die Seitenfläche der Nuten $45_i$ einstrahlen, die den Flanken der Raumbereiche $1_i$ gegenüberliegen. In diesem Fall hebt sich der Schriftzug dunkel von der ansonsten erleuchteten Lichtaustrittsfläche 2 ab. Bei der in Fig. 10a, 10b gezeigten Ausführungsform der Erfindung sind die Buchstaben nicht vollständig aus einem transparenten Körper wie bei der ersten Ausführungsform (Fig. 1) ausgeschnitten, sondern lediglich reliefartig in dem Körper ausgebildet. In beiden Fällen umläuft aber die Lichtquelle ein Körperelement, daß einem Schriftzeichen entspricht. Die Ausleuchtung der Raumbereiche $l_i$ läßt sich daher durch ähnliche Maßnahmen wie im Zusammenhang mit der ersten Ausführungsform und den Figuren 1 bis 7 geschildert optimieren. Wenn gewünscht ist, daß sich die Schriftzeichen dunkel von einem hellen Hintergrund abheben, wendet man entsprechend die in Verbindung mit Fig. 1 bis 7 beschriebenen Prinzipien nicht auf die Raumbereiche $1_i$, sondern auf die Teile des Körpers an, die zwischen den Raumbereichen $1_i$ liegen und stärker ausgeleuchtet werden sollen. Die Nuten $45_i$ können in einer weiteren Abwandlung statt auf der verspiegelten Rückseite 3 auch auf der Lichtaustrittsfläche 2 ausgebildet sein.

Im Zusammenhang dieser Beschreibung wurden die bandförmigen Lichtquellen der Einfachheit halber in offenen Nuten dargestellt. Sie können jedoch auch vergossen werden, wobei man z.B. zunächst die Nuten wie beschrieben ausbildet, die Lichtquellen darin anordnet und sie dann anschließend in den Nuten vergießt.

Die in der vorstehenden Beschreibung, den Ansprüchen sowie der Zeichnung offenbarten Merkmale der Erfindung können sowohl einzeln als auch in beliebiger Kombination für die Ver wirklichung der Erfindung in ihren verschiedenen Ausführungsformen wesentlich sein.

**Patentansprüche**

1. Leuchtvorrichtung mit einem Körper (1) aus einem transparenten Material sowie einer oder mehreren Lichtquellen, welche Licht in den Körper einstrahlen, wobei der Körper an einer Seite eine Lichtaustrittsfläche (2) aufweist, über welche das von der oder den Lichtquelle(n) in den Körper eingestrahlte Licht aus dem Körper austritt, wobei eine Seitenfläche des Körpers (3) zumindest teilweise als Spiegel oder Reflektor für in den Körper laufendes Licht ausgebildet ist, der auf ihn einfallendes Licht zumindest teilweise zu der Lichtaustrittsfläche (2) reflektiert, **dadurch gekennzeichnet**, daß mindestens eine der Lichtquellen bandförmig ist, bezüglich ihrer Längsrichtung kontinuierlich Licht abstrahlt und unmittelbar an oder in dem Körper derart angebracht ist, daß das Licht, das aus einer dem Körper zugewandten Seite der bandförmigen Lichtquelle (6) austritt, im wesentlichen vollständig in den Körper (1) eintritt.

2. Leuchtvorrichtung nach Anspruch 1, dadurch gekennzeichnet, daß ein Wandabschnitt (25a; 25b) in einem Kantenbereich des Körpers (1) als gekrümmter Spiegel ausgebildet ist, der von der bandförmigen Lichtquelle (6) direkt auf ihn einfallendes Licht zu der Lichtaustrittsfläche (2, 32) reflektiert.

3. Leuchtvorrichtung nach Anspruch 1 oder 2 dadurch gekennzeichnet, daß der als gekrümmter Spiegel oder Reflektor ausgebildete Wandabschnitt (63) als Sammelspiegel ausgebildet ist und an die Lichtaustrittsfläche (32) angrenzt.

4. Leuchtvorrichtung nach einem der Ansprüche 1 bis 3, dadurch gekennzeichnet, daß der als gekrümmter Spiegel oder Reflektor ausgebildete Wandabschnitt (25a, 54a) einer als Spiegel oder Reflektor ausgebildeten Seitenfläche (3; 37) des Körpers benachbart ist, welche zumindest einen Teil des auf sie aus dem Körper (1) einfallenden Lichts zu der Lichtaustrittsfläche reflektiert.

5. Leuchtvorrichtung nach einem der Ansprüche 1 bis 4 gekennzeichnet durch eine reflektierende Anordnung mit einer ersten als Spiegel oder Reflektor ausgebildeten Wandfläche des Körper (25b), die aus dem Inneren des Körpers auf sie einfallendes Licht zumindest teilweise zu einer zweiten als Spiegel ausgebildeten Wandfläche (3) des Körpers reflektiert, die auf sie einfallendes Licht zumindest teilweise zu der Lichtaustrittsfläche (2) reflektiert.

6. Leuchtvorrichtung nach Anspruch 5, dadurch gekennzeichnet, daß die erste als Spiegel oder Reflektor ausgebildete Wandfläche (25b) der reflektierenden Anordnung gekrümmt ist.

7. Leuchtvorrichtung nach Anspruch 5 oder 6, dadurch gekennzeichnet, daß die erste als Spiegel ausgebildete Wandfläche (2) angrenzt.

8. Leuchtvorrichtung nach einem der Ansprüche 1 bis 7 dadurch gekennzeichnet, daß der Lichtaustrittsfläche (2) eine im wesentlichen parallele, als Spiegel oder Reflektoren ausgebildete Fläche (3) des Körpers (1) gegenübersteht.

9. Leuchtvorrichtung nach Anspruch 8, gekennzeichnet durch zwei ebene, als Spiegel oder Reflektor ausgebildete Flächen (14a, 14b) zur Reflexion von in dem Körper laufendem Licht, die zueinander um 90° geneigt sind, wobei eine dieser beiden Flächen (14b) an die zu der Lichtaustrittsfläche im wesentlichen parallele, als Spiegel oder Reflektor ausgebildete Fläche (3) anschließt und bezüglich dieser Fläche (3) geneigt ist.

10. Leuchtvorrichtung nach einem der Ansprüche 1 bis 9, dadurch gekennzeichnet, daß sich die bandförmige Lichtquelle (6) im wesentlichen in einer Richtung parallel zur Lichtaustrittsfläche erstreckt.

11. Leuchtvorrichtung nach einem der Ansprüche 1 bis 10 dadurch gekennzeichnet, daß die bandförmige Lichtquelle (6) derart angeordnet ist, daß das direkt von ihr auf die Lichtaustrittsfläche (2) einfallende Licht einen Einfallswinkel (a) aufweist, der größer ist als der Winkel der Totalreflexion.

12. Leuchtvorrichtung nach Anspruch 11 dadurch gekennzeichnet,
daß die als Spiegel ausgebildeten Flächen des Körpers (1) so eingerichtet sind, daß das von ihnen zu der Lichtaustrittsfläche (2) reflektierte Licht an der Lichtaustrittsfläche einen Einfallswinkel aufweist, der größer als der Winkel der Totalreflexion ist, und die Lichtaustrittsfläche (2) einen Abschnitt mit einer unregelmäßigen Oberfläche aufweist.

13. Leuchtvorrichtung nach einem der Ansprüche 1 bis 12, dadurch gekennzeichnet, daß der Körper (1) eine im wesentlichen rotationssymmetrische Form aufweist und die Lichtaustrittsfläche (72) im wesentlichen senkrecht zu der Symmetrieachse liegt.

14. Leuchtvorrichtung nach einem der Ansprüche 1 bis 11 gekennzeichnet durch eine rotationssymmetrische kegelförmige Lichtaustrittsfläche (32), welche sich zum Inneren des Körpers (1) hin verjüngt

**15.** Leuchtvorrichtung nach einem der Ansprüche 1 bis 12, dadurch gekennzeichnet, daß sie in der Form eines Schriftzeichens oder einer Folge von Schriftzeichen ausgebildet ist.

**Claims**

**1.** Illuminating device having a body (1) made from a transparent material, as well as one or more light sources which shine light into the body, the body having on one side a light exit surface (2) via which the light shone into the body by the light source or sources exits from the body, a lateral surface of the body (1) being constructed at least partly as a mirror or reflector for light running in the body, which reflects light incident on it at least partly towards the light exit surface (2), characterized in that at least one of the light sources is strip-shaped, emits light continuously with reference to its longitudinal direction and is fitted directly on or in the body in such a way that the light which exits from a side, facing the body, of the strip-shaped light source (6) enters the body (1) essentially completely.

**2.** Illuminating device according to Claim 1, characterized in that a wall section (25a; 25b) is constructed in an edge region of the body (1) as a curved mirror which reflects light incident on it directly from the strip-shaped light source (6) towards the light exit surface (2, 32).

**3.** Illuminating device according to Claim 1 or 2, characterized in that the wall section (63) constructed as a curved mirror or reflector is constructed as a concave mirror and adjoins the light exit surface (32).

**4.** Illuminating device according to one of Claims 1 to 3, characterized in that the wall section (25a, 54a) constructed as a curved mirror or reflector is adjacent to a lateral surface (3; 37), which is constructed as a mirror or reflector, of the body and reflects at least a portion of the light incident on it from the body (1) towards the light exit surface.

**5.** Illuminating device according to one of Claims 1 to 4, characterized by a reflecting arrangement having a first wall surface, which is constructed as a mirror or reflector, of the body (25b), which reflects light incident on it from the interior of the body at least partly towards a second wall surface (3), which is constructed as a mirror, of the body and reflects light incident on it at least partly towards the light exit surface (2).

**6.** Illuminating device according to Claim 5, characterized in that the first wall surface (25b), which is constructed as a mirror or reflector, of the reflecting arrangement is curved.

**7.** Illuminating device according to Claim 5 or 6, characterized in that the first wall surface (2) constructed as a mirror is adjacent.

**8.** Illuminating device according to one of Claims 1 to 7, characterized in that the light exit surface (2) is opposite an essentially parallel surface (3), which is constructed as a mirror or reflector, of the body (1).

**9.** Illuminating device according to Claim 8, characterized by two plane surfaces (14a, 14b), constructed as mirrors or reflectors, for reflecting light running in the body, which are inclined by 90° to one another, one of these two surfaces (14b) adjoining the surface (3) which is essentially parallel to the light exit surface and is constructed as a mirror or reflector, and being inclined with respect to this surface (3).

**10.** Illuminating device according to one of Claims 1 to 9, characterized in that the strip-shaped light source (6) extends essentially in a direction parallel to the light exit surface.

**11.** Illuminating device according to one of Claims 1 to 10, characterized in that the strip-shaped light source (6) is arranged in such a way that the light incident from it directly onto the light exit surface (2) has an angle (a) of incidence which is greater than the angle of total reflection.

**12.** Illuminating device according to Claim 11, characterized in that the surfaces of the body (1) constructed as a mirror are set up such that the light reflected by them towards the light exit surface (2) has at the light exit surface an angle of incidence which is greater than the angle of total reflection, and the light exit surface (2) has a section with an irregular surface.

**13.** Illuminating device according to one of Claims 1 to 12, characterized in that the body (1) has an essentially rotationally symmetrical shape, and the light exit surface (72) is situated essentially perpendicular to the axis of symmetry.

**14.** Illuminating device according to one of Claims 1 to 11, characterized by a rotationally symmetrical conical light exit surface (32) which tapers towards the interior of the body (1).

**15.** Illuminating device according to one of Claims 1 to 12, characterized in that it is constructed in the form of a graphic character or a sequence of graphic characters.

## Revendications

1. Dispositif lumineux comportant un corps (1) en une matière transparente ainsi qu'une ou plusieurs source(s) de lumière, qui envoient de la lumière dans le corps, le corps présentant, sur un côté, une face d'émergence de lumière (2) par l'intermédiaire de laquelle la lumière émise par la ou les source(s) de lumière et ayant pénétré dans le corps ressort de celui-ci, une face latérale (3) du corps étant réalisée, du moins en partie, en tant que miroir ou que réflecteur pour la lumière passant dans le corps, lequel miroir réfléchit, du moins en partie, la lumière arrivant sur lui en direction de la face d'émergence de lumière (2), caractérisé en ce qu'au moins l'une des sources de lumière est en forme de bande, elle émet en continu de la lumière selon sa direction longitudinale, et elle est disposée immédiatement au contact du corps ou dans le corps, de telle manière que la lumière, qui sort du côté de la source de lumière (6) en forme de bande qui est tourné vers le corps, pénètre sensiblement complètement dans le corps (1).

2. Dispositif lumineux selon la revendication 1, caractérisé en ce qu'une partie de paroi (25a ; 25b) située dans une zone de bord du corps (1) est réalisée en tant que miroir courbe, qui réfléchit, vers la face d'émergence de lumière (2, 32), la lumière qui arrive directement sur lui en provenance de la source de lumière (6) en forme de bande.

3. Dispositif lumineux selon la revendication 1 ou 2, caractérisé en ce que la partie de paroi (63), réalisée en tant que miroir courbe ou réflecteur, est conçue sous la forme d'un miroir concave et est située de manière adjacente à la face d'émergence de lumière (32).

4. Dispositif lumineux selon l'une des revendications 1 à 3, caractérisé en ce que la partie de paroi (25a, 54a), réalisée en tant que miroir courbe ou réflecteur, est voisine d'une face latérale (3 ; 37) du corps, réalisée en tant que miroir ou réflecteur et qui réfléchit, en direction de la face d'émergence de lumière, au moins une partie de la lumière arrivant sur elle à partir du corps (1).

5. Dispositif lumineux selon l'une des revendications 1 à 4, caractérisé par un agencement réfléchissant, comportant une première surface de paroi (25b) du corps, réalisée en tant que miroir ou réflecteur, et qui réfléchit, du moins en partie, la lumière arrivant sur elle en provenance de l'intérieur du corps, vers une deuxième surface de paroi (3) du corps, réalisée en tant que miroir et qui réfléchit, du moins en partie, la lumière qu'elle reçoit, en direction de la face d'émergence de lumière (2).

6. Dispositif lumineux selon la revendication 5, caractérisé en ce que la première surface de paroi (25b), réalisée en tant que miroir ou réflecteur, de l'agencement réfléchissant est courbe.

7. Dispositif lumineux selon la revendication 5 ou 6, caractérisé en ce que la première surface de paroi, réalisée en tant que miroir, est adjacente à la face d'émergence de lumière (2).

8. Dispositif lumineux selon l'une des revendications 1 à 7, caractérisé en ce que la face d'émergence de lumière (2) est située en face d'une face (3) du corps (1), réalisée en tant que miroir ou réflecteur, de manière sensiblement parallèle à celle-ci.

9. Dispositif lumineux selon la revendication 8, caractérisé par deux surfaces (14a, 14b) plates et réalisées en tant que miroirs ou réflecteurs, pour la réflexion de la lumière passant dans le corps, ces surfaces étant inclinées à 90° l'une par rapport à l'autre, et l'une (14b) de ces deux surfaces se raccordant à la face (3) réalisée en tant que miroir ou réflecteur et située sensiblement parallèlement à la face d'émergence de lumière, cette surface étant inclinée par rapport à cette face (3) .

10. Dispositif lumineux selon l'une des revendications 1 à 9, caractérisé en ce que la source de lumière (6) en forme de bande s'étend sensiblement dans une direction parallèle à la face d'émergence de lumière.

11. Dispositif lumineux selon l'une des revendications 1 à 10, caractérisé en ce que la source de lumière (6) en forme de bande est disposée de telle manière que la lumière arrivant, directement à partir d'elle, sur la face d'émergence de lumière (2) présente un angle d'incidence (a), qui est plus grand que l'angle de la réflexion totale.

12. Dispositif lumineux selon la revendication 11, caractérisé en ce que les surfaces du corps (1), réalisées en tant que miroirs, sont orientées de telle manière que la lumière réfléchie par elles en direction de la face d'émergence de lumière (2) présente un angle d'incidence sur la face d'émergence de lumière, qui est plus grand que l'angle de la réflexion totale, et en ce que la face d'émergence de lumière (2) présente une partie dont la surface est irrégulière.

13. Dispositif lumineux selon l'une des revendications 1 à 12, caractérisé en ce que le corps (1) présente une forme sensiblement à symétrie de révolution et en ce que la face d'émergence de lumière (72) est située sensiblement perpendiculairement à l'axe de symétrie.

**14.** Dispositif lumineux selon l'une des revendications 1 à 11, caractérisé par une face d'émergence de lumière (32) à symétrie de révolution et de forme conique, allant en s'amincissant en direction de l'intérieur du corps (1).

**15.** Dispositif lumineux selon l'une des revendications 1 à 12, caractérisé en ce qu'il est réalisé sous la forme d'un caractère ou d'une suite de caractères.

Fig. 1

Fig. 2

EP 0 821 820 B1

Fig. 3

Fig. 4

Fig. 5a

EP 0 821 820 B1

Fig. 5b

Fig. 6a

Fig. 6b

Fig. 6c

Fig. 6d

EP 0 821 820 B1

Fig. 6e

Fig. 6f

Fig. 6 g

Fig. 6 h

EP 0 821 820 B1

Fig. 6i

Fig. 6j

EP 0 821 820 B1

Fig. 7a

Fig. 7b

Fig. 7c

Fig. 7d

Fig. 8

EP 0 821 820 B1

Fig. 9a

Fig. 9b

Fig. 10a

Fig. 10 b